# EUROPEAN PATENT SPECIFICATION

(11) **EP 3 605 959 B1**
(45) Date of publication and mention of the grant of the patent: **12.01.2022**
(21) Application number: 18771396.1
(22) Date of filing: 16.03.2018
(51) Int. Cl.: H04L 12/46, H04L 12/741, H04L 29/12, H04L 12/24, H04L 12/717, H04L 12/715, H04L 12/911, H04L 12/915, H04L 12/935, H04L 12/931, H04L 12/751

(54) **METHOD, DEVICE AND COMPUTER STORAGE MEDIUM FOR IMPLEMENTING DOUBLE CONTROL PLANE**
VERFAHREN, VORRICHTUNG UND COMPUTERSPEICHERMEDIUM ZUR IMPLEMENTIERUNG EINER DOPPELTEN STEUERUNGSEBENE
PROCÉDÉ, DISPOSITIF, ET SUPPORT DE STOCKAGE INFORMATIQUE POUR METTRE EN OEUVRE UN DOUBLE PLAN DE COMMANDE

(30) Priority: 20.03.2017 CN 201710165894
(43) Date of publication of application: 05.02.2020
(73) Proprietor: ZTE Corporation, Shenzhen, Guangdong 518057 (CN)
(72) Inventor: ZHANG, Pingping, Shenzhen Guangdong 518057 (CN); CHEN, Zhiwei, Shenzhen Guangdong 518057 (CN); XIA, Yingchun, Shenzhen Guangdong 518057 (CN); SUN, Junhuan, Shenzhen Guangdong 518057 (CN)
(74) Representative: Ipsilon
(86) International application number: PCT/CN2018/079340
(87) International publication number: WO 2018/171529

(56) References cited:
- WO-A1-2016/045637
- WO-A1-2016/166403
- WO-A1-2017/015839
- CN-A- 106 105 117
- CN-A- 106 210 157
- US-A1- 2016 226 817
- US-A1- 2016 301 655
- HUI LU ET AL: "HybNET", 20131209; 1077952576 - 1077952576, 9 December 2013 (2013-12-09), pages 1-6, XP058036329, DOI: 10.1145/2541596.2541602 ISBN: 978-1-4503-2550-9
- Victor Boteanu ET AL: "UNIVERSITY OF AMSTERDAM GRADUATE SCHOOL OF INFORMATICS System and Network Engineering Minimizing ARP traffic in the AMS-IX switching platform using OpenFlow", , 25 August 2013 (2013-08-25), pages 1-29, XP055314588, Retrieved from the Internet: URL:http://dare.uva.nl/cgi/arno/show.cgi?f id=496629 [retrieved on 2016-10-27]

## Description

### TECHNICAL FIELD

The present application relates to data exchange technologies in the field of Ethernet data centers, especially to a method, device and computer-readable storage for implementing double control planes.

### BACKGROUND

Software Defined Network (SDN) is a new and innovative network architecture of Emulex network and an implementation of network virtualization. Its core technology, OpenFlow, separates a control plane of the network device from a data plane thereof, thereby realizing flexible control of network traffic and making the network more intelligent as a pipeline.

In networks of conventional IT architectures, after being deployed according to business requirements, if the service requirements change, it is very cumbersome to re-configure the configuration on the corresponding network devices (routers, switches, firewalls). In the fast-changing business environment of the Internet/mobile Internet, high stability and high performance of the network are not sufficient to meet the business requirements. Rather, flexibility and agility are more critical. What SDN does is to separate control right from the network device so that a centralized controller conducts management without relying on the underlying network devices (routers, switches, firewalls), thereby shielding differences from the underlying network devices. However, the control right is completely open, and a user may customize any network routing or transmitting rules and policies as desired, thus improving the flexibility and intelligent level.

In recent years, due to the network virtualization requirements of data centers, SDN technology has risen rapidly and brought great convenience to network design. Networks in the SDN era are no longer device-centric, but application-centric. Applications drive the change of the network. This requires a lot of deep-customized work, especially for cloud computing networks.

Although the application prospect of the SDN in networking of network devices is very bright, and the technical revolution brought by the SDN is also widely recognized, the application of a full SDN network at present has extremely high risk, because the SDN network is completely controlled by the controller, and the entire network may be paralyzed once the controller fails or is disconnected.

Further, in the existing art, WO2016/045637A1 disclosed a method and device for forwarding a data packet in a software defined network (SDN); WO2017015839A1 disclosed an SDN-based ARP realization method and apparatus; and US2016301655A1 disclosed a method of suppressing ARP packets in a logical network comprising a set of data compute nodes (DCNs).

### SUMMARY

In order to solve the above technical problem, embodiments of the present disclosure provided a method, device and computer-readable storage for implementing double control planes, that is, for enabling coexistence of a SDN control plane and a conventional control plane.

The present disclosure is defined in the appended claims.

By adopting the technical solutions of the embodiments of the present disclosure, the stability of the entire network is increased while making use of the convenience brought by SDN network. When the controller fails or is disconnected, the entire network can still keep smooth running of the route according to the conventional control plane, thereby having extremely high applicability in the field of data centers.

### BRIEF DESCRIPTION OF DRAWINGS

The drawings generally illustrate the various embodiments discussed herein by way of example instead of by limitation.
Fig. 1 is a first schematic flowchart of a method for implementing double control planes according to an embodiment of the present application;
Fig. 2 is a second schematic flowchart of a method for implementing double control planes according to an embodiment of the present application;
Fig. 3 is a third schematic flowchart of a method for implementing double control planes according to an embodiment of the present application;
Fig. 4 is a topology diagram of network networking according to an embodiment of the present application;
Fig. 5 is a first schematic structural diagram of a network device according to an embodiment of the present application;
Fig. 6 is a second schematic structural diagram of a network device according to an embodiment of the present application;
Fig. 7 is a workflow chart of a bridge interface according to an embodiment of the present application;
Fig. 8 is a flowchart of a controller triggering a next hop ARP learning according to an embodiment of the present application;
Fig. 9 is a flowchart of the controller triggered by traffic to carry out ARP learning according to an embodiment of the present application;
Fig. 10 is a first schematic structural diagram of a device for implementing double control planes according to an embodiment of the present application; and
Fig. 11 is a second schematic structural diagram of a device for implementing double control planes according to an embodiment of the present application.

### DETAILED DESCRIPTION

In order to make the features and technical disclosure of embodiments of the present application more clear, embodiments of the present application will be described below with respect to the accompanying drawings. The drawings are merely for reference and explanation, and are not intended to limit embodiments of the present application.

In an embodiment of the present application, there is provided a scheme of mixing of an SDN control plane and a conventional control plane, namely, a switching device can run not only on a conventional control plane, but also on an SDN control plane. Due to coexistence of the SDN control plane and the conventional control plane, it is necessary to solve the problem that the command of which one of the "double brains" (i.e., the SDN control plane and the conventional control plane) should be obeyed, that is, the problem about the priority of delivery of the entries. Due to the coexistence of the SDN control plane and the conventional control plane, some traffic of interface between an internal network of the data center and an external router needs to flow through the conventional control plane, and some needs to flow through the SDN control plane, and how to control the traffic between the control planes is also a technical problem to be solved by the embodiments of the present application. The conventional control plane needs to run various routing protocols, learn dynamic routing as well as the next hop of routing. The SDN control plane requires that the packets can trigger the controller to learn an accurate flow table. The technical solutions of the embodiments of the present application will be described below in four aspects: priority control of entries in the double control planes, bridging of SDN network and a conventional network, processing of southbound and northbound traffic, and ARP processing of access devices. Details of specific embodiments of the present application are illustrated below.

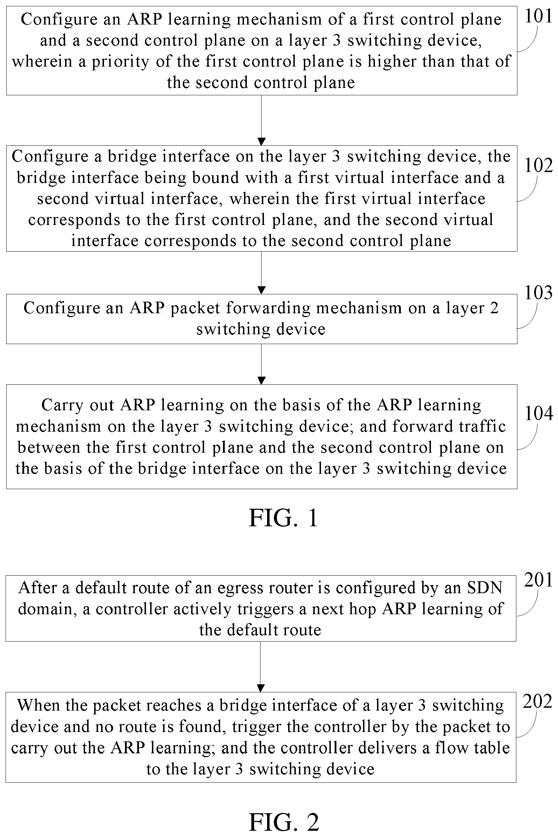

Fig. 1 is a first schematic flowchart of a method for implementing double control planes according to an embodiment of the present application. In this example, the method for implementing double control planes is applied to a switching device side and, as shown in Fig. 1, the method includes the following steps.

At step 101, configuring an ARP learning mechanism of a first control plane and a second control plane on a layer 3 switching device, wherein a priority of the first control plane is higher than that of the second control plane.

A layer 3 Virtual Extensible LAN (VXLAN) is configured for the layer 3 switching device in advance.

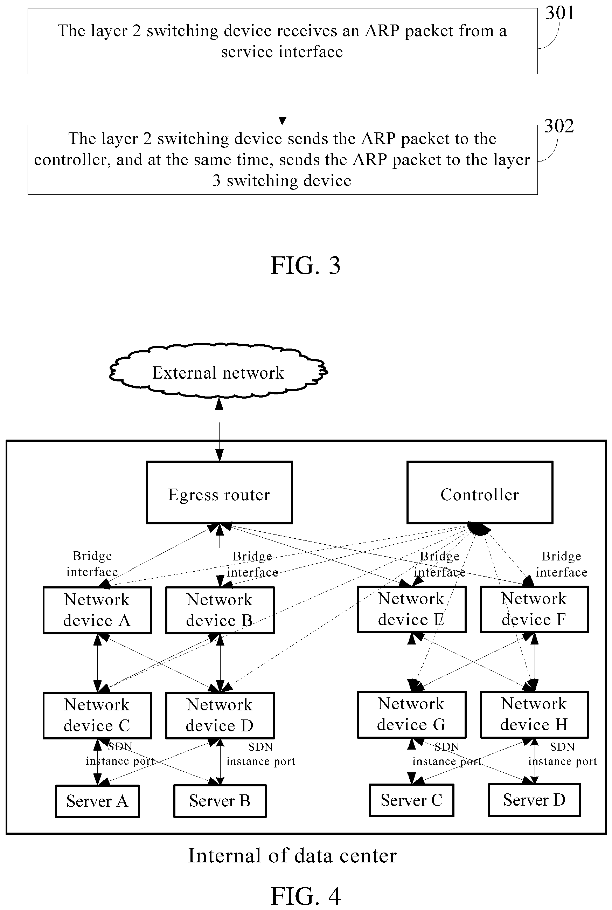

In the network topology shown in Fig. 4, the data center internally includes multiple groups of network device structures, such as device A/B, device C/D, Server A/Server B; device E/F, device G/H, Server C/Server D, in which devices A, B, E, and F are layer 3 switching devices, and devices C, D, G, and H are layer 2 switching devices. The embodiment of the present application takes device A/B, device C/D, Server A/Server B as an example for explanation, and device E/F, device G/H, Server C/Server D are configured in a similar way.

In the network topology shown in Fig. 4, device A/B and device C/D are connected with VXLAN tunnels, device A/B is configured with the relevant L3 VXLAN configuration on the conventional control plane, and device C/D is configured with the relevant L2 VXLAN configuration on the conventional control plane.

In the network topology shown in Fig. 4, device A/B is connected to the controller. Also, device C/D is connected to the controller.

In an embodiment of the present application, the ARP learning mechanism of the first control plane is a self-learning mechanism, and the ARP learning mechanism of the second control plane is a controller delivery mechanism.

In the network topology shown in Fig. 4, the VXLAN ARP learning for the network device A/B supports two control planes: conventional self-learning and the controller delivery, and the self-learning always has a highest priority.

At step 102, configuring a bridge interface on the layer 3 switching device, the bridge interface is bound with a first virtual interface and a second virtual interface, wherein the first virtual interface corresponds to the first control plane, and the second virtual interface corresponds to the second control plane.

At step 103, configuring an ARP packet forwarding mechanism on a layer 2 switching device.

At step 104, carrying out ARP learning on the basis of the ARP learning mechanism on the layer 3 switching device; and forwarding traffic between the first control plane and the second control plane on the basis of the bridge interface on the layer 3 switching device.

In an embodiment of the present application, the step of carrying out the ARP learning on the basis of the ARP learning mechanism on the layer 3 switching device includes:
inquiring, when the layer 3 switching device receives the ARP packet, whether an ARP address corresponding to the ARP packet is present in a local routing table;
adding, if the ARP address is not present in the local routing table, the ARP address to the local routing table, and labeling an entry corresponding to the ARP address as self-learning;
labeling, if the ARP address is present in the local routing table and an MAC address corresponding to the ARP address is consistent with an MAC address corresponding to an egress port, the entry corresponding to the ARP address as self-learning, and refreshing an update time for the entry corresponding to the ARP address; and
overwriting, if the ARP address is present in the local routing table and an MAC address corresponding to the ARP address is not consistent with an MAC address corresponding to an egress port, a corresponding entry in the local routing table according to the ARP address corresponding to the ARP packet, and labeling the entry corresponding to the ARP address as self-learning.

In an embodiment of the present application, the step of carrying out the ARP learning on the basis of the ARP learning mechanism on the layer 3 switching device includes:
inquiring, when the layer 3 switching device receives an ARP flow table adding message from a controller, whether an ARP address corresponding to the ARP flow table adding message is present in the local routing table;
adding, if the ARP address is not present in the local routing table, the ARP address to the local routing table, and labeling an entry corresponding to the ARP address as controller delivery;
maintaining the local routing table intact if the ARP address is present in the local routing table and an MAC address corresponding to the ARP address is consistent with an MAC address corresponding to an egress port; and
if the ARP address is present in the local routing table and an MAC address corresponding to the ARP address is not consistent with the MAC address corresponding to the egress port, maintaining the local routing table intact in a case that a corresponding entry in the local routing table is labeled as self-learning and overwriting the corresponding entry in the local routing table according to the ARP address corresponding to the ARP flow table adding message in a case that the corresponding entry in the local routing table is labeled as controller delivery.

In the above solution, a control to the priority of double control plane entries is proposed, specifically:
in the network topology shown in Fig. 4, the conventional self-learning (corresponding to the self-learning mechanism) specifically includes: when receiving a VXLAN ARP packet from a service port, the network device A/B dynamically learns the ARP packet according to the conventional self-learning process, that is, performs self-learning. 1) If the ARP address is not included in the local routing table, directly adding an entry, and labeling the FLAG as dynamic learning or self-learning; 2) if the ARP address already exists locally and the MAC is consistent with the egress port information, labeling the FLAG as dynamic learning to amend the state of the ARP as dynamic learning or self-learning; and 3) if the MAC is not consistent with the egress port, overwriting the original entry, and labeling the FLAG as dynamic learning or self-learning.

In the network topology shown in Fig. 4, controller delivering the ARP specifically includes: when receiving an ARP flow table adding message from the controller, the network device A/B 1) directly adds the entry and label the Flag as controller delivery if the ARP address is not included in the local routing table; 2) does not perform any processing if the ARP address already exists locally and the MAC is consistent with the egress port information; and 3) if the ARP address already exists locally and the MAC is not consistent with the egress port information, does not perform any processing in a case that the original Flag is dynamic learning and overwrite the original entry in a case that the original Flag is controller delivery.

The VXLAN ARP learned by the conventional control plane has a higher priority. The controller compares the ARP stored in the controller itself with the ARP table on the switch periodically to ensure synchronization between the two. If an ARP is present in the controller but not in the switch, the ARP is delivered to the switch; and if an ARP is present in both the controller and the switch but the egresses thereof are different, the controller retrieves the ARP from the switch to overwrite the local one.

Through the above method, when the controller is abnormal, the traffic is forwarded according to the entries learned by the conventional control plane. When the conventional plane does not learn the related entries, the traffic is forwarded according to the flow table delivered by the controller. In the case of a migration of a virtual machine, when data of the entries on the controller are out of synchronization with data of the entries learned by the conventional control plane, the controller retrieves the entries learned by the conventional plane to overwrite the local ones to implement synchronization.

Based on the method shown in Fig. 1, the solution of the embodiment of the present application may further include:
the first virtual interface is an IP protocol stack virtual interface, and the second virtual interface is an SDN protocol stack virtual interface; wherein
the layer 3 switching device distributes a route of the SDN network to an egress router through the IP protocol stack virtual interface; and
the layer 3 switching device receives a flow table delivered by the controller through the SDN protocol stack virtual interface.

In an implementation, the layer 3 switching device includes: an SDN protocol stack module, an IP protocol stack module, and a packet transceiving module. The SDN protocol stack module receives an ARP request sent by the controller, adds an SDN protocol stack virtual interface flag (a flag indicating the SDN protocol stack virtual interface) to the ARP request and then sends the ARP request to the packet transceiving module. The packet transceiving module replaces the SDN protocol stack virtual interface flag with an IP protocol stack virtual interface flag (a flag indicating the IP protocol stack virtual interface) and then sends the ARP request to the IP protocol stack module;
the IP protocol stack module carries out the ARP learning, adds an IP protocol stack virtual interface flag to an ARP reply and sends the ARP reply to the packet transceiving module; the packet transceiving module replaces the IP protocol stack virtual interface flag with an SDN protocol stack virtual interface flag and sends the ARP reply to the SDN protocol stack module; and
the SDN protocol stack module sends the ARP reply to the controller to trigger the controller to carry out the ARP learning according to the ARP reply.

In another implementation, for a layer 3 packet of southbound traffic, when the layer 3 packet reaches the bridge interface and no route is found, the packet is sent to the IP protocol stack module via a network segment route; the IP protocol stack module performs a route inquiry according to an destination IP of the packet, adds an IP protocol stack virtual interface flag to the packet if an egress route of the IP protocol stack virtual interface is found, and triggers the APR learning of the self-learning mechanism if the egress route of the IP protocol stack virtual interface is not found;
the IP protocol stack module sends the packet with the IP protocol stack virtual interface flag to the packet transceiving module; the packet transceiving module replaces the IP protocol stack virtual interface flag with an SDN protocol stack virtual interface flag and sends the packet to the SDN protocol stack module;
the SDN protocol stack module encapsulates the packet and then sends the packet to the controller to trigger the controller to carry out the ARP learning; and
the SDN protocol stack module receives the flow table delivered by the controller.

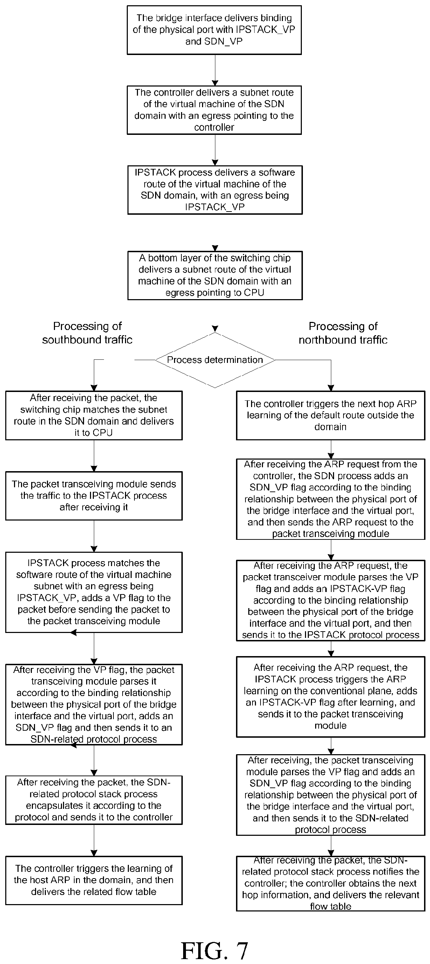

In the above solution, the bridging of the internal network and the external network, and the processing of the southbound and northbound traffic are proposed, specifically:
1) Bridging of internal network and external network
   The mode where the SDN control plane and the conventional control plane coexist poses a challenge for the packet sending and receiving at the bridging port of the internal network and the external network, because a reasonable manner is required for sending the packet to the correct protocol stack (conventional IP protocol stack or SDN protocol stack).
   A bridge interface is adopted for the bridging of traffic between the SDN domain and the conventional domain. The interface may take use of the characteristics of existing routing protocols of conventional control planes, to distribute the route of the internal SDN network to an uplink router (egress router), thereby guiding down the traffic sent to the data center (DC) from the external, while acting as an flow table egress for the traffic sent from the internal of the SDN to the external in response to an instruction of the controller. The bridge interface is a concept extending from the general physical port and the SDN port. The general physical port can only send the received protocol packet to a conventional IPSTACK process, and the SDN port can only send the received protocol packet to an SDN-related protocol process. For the scenario where the conventional control plane and the SDN control plane coexist, the concept of bridge interface is proposed here, that is, this interface can not only distribute conventional routing protocols, but also be controlled by the controller as an interface from the SDN domain to the outside.
   Since the two control planes (the conventional protocol stack control plane and the SDN control plane) of the switch belong to different processes, the bridge interface is bound with two virtual interfaces, i.e., a conventional protocol stack virtual interface and an SDN control plane virtual interface, which are referred to as IPSTACK_VP and SDN_VP below, respectively. The two virtual interfaces are bound to a physical port of the bridge interface, and the binding relationship is delivered after the user configures the bridge interface. The bottom layer of the switch does not need to store the route of the virtual egress, but only needs to store the route actually used in the forwarding. However, a sending channel for the packet between the conventional IP protocol stack process and the SDN protocol process is required to be implemented, that is, a decision is required to be made for sending the packet to the corresponding process according to a virtual egress flag (IPSTACK_VP or SDN_VP) in the packet delivery information (from the conventional IP protocol stack process and the SDN protocol process). In addition, for the forwarding of southbound traffic, the controller will delivers, to the conventional control plane IP protocol stack, a network segment route whose egress points to IPSTACK_VP, which network segment is the network segment of the network where the virtual machine is located. In this way, when the southbound data packet fails to match an accurate flow table, it will be sent to the controller through this network segment route, and the controller delivers entries of the accurate flow table. The implementation flow of the bridge interface may be seen in Fig. 7.
   By adopting the scheme of bridge interface and the manner of virtual interface, it is realized that the data packet and the protocol packet on the conventional control plane and the SDN plane do not interfere with each other without changing the current data forwarding and protocol packet sending processes on the conventional control plane in a switch.
2) Processing of southbound and northbound traffic
   For the northbound traffic, after the SDN domain configures a default egress route, the controller actively triggers the next hop ARP learning of the default route. The controller sends the ARP request to the SDN protocol stack of the switch, and the SDN protocol stack adds an egress flag of SDN_VP to the packet. Then the packet is sent to an IP protocol stack, and the IP protocol stack is responsible for, after the conventional control plane has learned the ARP, sending an ARP reply packet to the SDN protocol stack of the switch while adding a flag of IPSTACK_VP thereto. Finally, after receiving the ARP reply, the SDN controller learns the ARP and delivers a related flow table of the default route. Here, the exchange between the two protocol stacks is implemented by switching back by the packet transceiving module, that is, the two protocol stacks do not exchange information directly, but through the packet transceiving module. This has the advantage that the processing mode of the existing switch protocol stacks for transceiving packets does not need to be changed.

For the southbound traffic, the most critical processing is to trigger the controller to learn the host ARP if no route is found when the packet reaches the bridge interface, and then deliver the packet to the switch to deliver the flow table. After receiving the layer 3 packet, if no route is found, the switch will send the packet through the network segment route to the conventional IP protocol stack. If the IP protocol stack can match an IPSTACK_VP, a flag of IPSTACK_VP will be added. Then, the SDN protocol stack will receive this packet, and the SDN protocol stack is responsible for encapsulating the SDN protocol packet (for example, OPEN_FLOW) and then sending it to the SDN controller. After the SDN controller receives the packet, the SDN controller triggers the ARP learning and delivers an internal network host route.

Through the above method, when the traffic from south to north does not have a next hop, the controller can learn the egress information of the next hop on the conventional control plane and then deliver a route towards the external network. When the traffic is entering the data center from north to south without matching an accurate flow table, the data packet is sent to the protocol stack of the conventional control plane and is then bridged to the SDN-related protocol stack and triggers the controller to deliver the accurate flow table.

At step 105, forwarding an ARP packet on the basis of the ARP packet forwarding mechanism on the layer 2 switching device.

In an embodiment of the present application, the step of forwarding the ARP packet on the basis of the ARP packet forwarding mechanism on the layer 2 switching device includes:
causing, when the ARP packet sent by a server is received by the layer 2 switching device, the layer 2 switching device to send the ARP packet to the layer 3 switching device to carry out the ARP learning, and sending the ARP packet to the controller to carry out the ARP learning.

Fig. 2 is a second schematic flowchart of a method for implementing double control planes according to an embodiment of the present application. In this example, the method for implementing double control planes is applied to a controller side and, as shown in Fig. 2, includes the following steps 201 to 202.

At step 201, after a default route of an egress router is configured by an SDN domain, a controller actively triggers a next hop ARP learning of the default route.

Specifically, after the SDN domain configures the default route of the egress router, the controller sends the ARP request to the SDN protocol stack module of the layer 3 switching device, wherein the SDN protocol stack module adds an SDN protocol stack virtual interface flag to the ARP request, and sends the ARP request to a packet transceiving module; the packet transceiving module replaces the SDN protocol stack virtual interface flag with an IP protocol stack virtual interface flag, and sends the ARP request to the IP protocol stack module; the IP protocol stack module carries out the ARP learning, adds an IP protocol stack virtual interface flag to an ARP reply and sends the ARP reply to the packet transceiving module; the packet transceiving module replaces the IP protocol stack virtual interface flag with an SDN protocol stack virtual interface flag and sends the ARP reply to the SDN protocol stack module; and the controller receives the ARP reply sent by the SDN protocol stack module, and performs ARP learning according to the ARP reply.

In the above solution, for the northbound traffic, after the SDN domain configures the default egress rout, the controller actively triggers the next hop ARP learning of the default route. The controller sends an ARP request to the SDN protocol stack of the switch, and the SDN protocol stack adds an egress flag of SDN_VP to the packet. Then the packet is sent to an IP protocol stack, and the IP protocol stack is responsible for, after the conventional control plane has learned the ARP, sending an ARP reply packet to the SDN protocol stack of the switch and adding a flag of IPSTACK_VP thereto. Finally, after receiving the ARP reply, the SDN controller learns the ARP and delivers a related flow table of the default route. Here, the exchange of the two protocol stacks is implemented by switching back by the packet transceiving module, that is, the two protocol stacks do not exchange information directly, but through the packet transceiving module, so that it is not necessary to change the existing processing mode for transceiving packets of the switch protocol stacks.

At step 202, when the packet reaches a bridge interface of a layer 3 switching device and no route is found, triggering the controller by the packet to carry out the ARP learning; and the controller delivers a flow table to the layer 3 switching device.

Specifically, when the layer 3 packet reaches the bridge interface but no route is found, the controller receives the encapsulated packet sent by the SDN protocol stack module, where the encapsulated packet is generated in the following manner: sending, when the layer 3 packet reaches the bridge interface and no route is found, the packet to an IP protocol stack module via a network segment route; causing the IP protocol stack module to perform a route inquiry according to an destination IP of the packet, and add an IP protocol stack virtual interface flag to the packet in a case that an egress route of the IP protocol stack virtual interface is found; causing the IP protocol stack module to send the packet with the IP protocol stack virtual interface flag to the packet transceiving module; causing the packet transceiving module to replace the IP protocol stack virtual interface flag with an SDN protocol stack virtual interface flag and send the packet to the SDN protocol stack module; causing the SDN protocol stack module to encapsulate the packet to obtain an encapsulated packet; causing the controller to carry out the ARP learning and update the flow table after the encapsulated packet is received by the controller; and causing the controller to send the updated flow table to the SDN protocol stack module in the layer 3 switching device.

In the above solution, the most critical processing for the southbound traffic is to trigger the controller to learn the host ARP if no route is found when the packet reaches the bridge interface, and then deliver to the switch the delivered flow table. After receiving the layer 3 packet, if no route is found, the switch will send the packet through the network segment route to the conventional IP protocol stack. If the IP protocol stack can match the IPSTACK_VP, a flag of IPSTACK_VP will be added, and then the SDN protocol stack will receive the packet. The SDN protocol stack is responsible for encapsulating the SDN protocol packet (for example, OPEN_FLOW) and sending it to the SDN controller. After receiving the packet, the SDN controller triggers the ARP learning, and delivers an internal network host route.

In an embodiment of the present application, when the traffic from south to north does not have a next hop, the controller can learn the egress information of the next hop on the conventional control plane and then deliver a route towards the external network. When the traffic is entering the data center from north to south without matching an accurate flow table, the data packet is sent to the protocol stack of the conventional control plane and is then bridged to the SDN-related protocol stack and triggers the controller to deliver the accurate flow table.

In an embodiment of the present application, the controller periodically compares a local routing table and a routing table on the switching device, and updates, when an entry in the local routing table is inconsistent with that of the routing table on the switching device, the entry on the switching device to the local.

Fig. 3 is a third schematic flowchart of a method for implementing double control planes according to an embodiment of the present application. In this example, the method for implementing double control planes is applied to a switching device side and, as shown in Fig. 3, includes the following steps 301 to 302.

At step 301, the layer 2 switching device receives an ARP packet from a service interface.

In an embodiment of the present application, firstly, a layer 2 VXLAN configuration is performed on the layer 2 switching device; and the layer 2 switching device is connected to the controller. For more details, please refer to the network topology shown in Fig. 4.

At step 302, the layer 2 switching device sends the ARP packet to the controller, and at the same time, sends the ARP packet to the layer 3 switching device.

In an embodiment of the present application, the layer 2 switching device (i.e., the network device connected to the SERVER) distinguishes a downlink port (connected to other network devices) and an uplink port (connected to the SERVER). For the uplink port, the ARP packet needs to support forwarding through a normal, traditional control plane (LOCAL forwarding in the local VLAN and tunnel forwarding into the VXLAN Tunnel End Point (VTEP)), while it is needed to copy the ARP packet and sent the copy to the controller. For the downlink port, the forwarding of the ARP packet is according to forwarding of the normal, conventional control plane, and the ARP packet does not need to be copied and sent to the controller.

Through the above solution, an access network device sends the ARP packet sent by the SERVER to an upstream network device so that the uplink network device learns the ARP in the conventional plane and sends the ARP to the controller. In this way, the ARP can be learned in both the controller plane and the conventional plane, thereby achieving dual backup.

The solutions of the embodiments of the present application are further described in detail below with reference to specific scenarios, and an OPENFLOW protocol type controller is taken as an example for description.

Fig. 4 shows the technical background of the present application. Servers A, B, C, and D respectively access the network devices C, D, G, and H through a single network card, and the connection ports with the network devices C, D, G, and H are SDN instance ports. The network devices C and D are configured in a stack, where the network device C is in load sharing connection with the network devices A and B, and the network device D is in load sharing connection with the network devices A and B. On the conventional control plane, a VXLAN tunnel between the network devices C, D and the network devices A, B is configured, where C/D are used as L2 VTEP access, and A and B are used as L3 VXLAN gateways. The ports controlled by the controller are the SDN instance ports of the network devices C and D and the bridge interfaces of the network devices A and B, respectively. A routing protocol is started on the bridge interface, and the controller can distribute a route of the internal SDN network to an external network router (egress router). Traffic from north to south flows through L2 access of the VXLAN on the network devices C and D. The packet enters the network device A/B after getting on the tunnel, and, after being decapsulated on the device, the traffic searched for a route and is sent to the external router. The traffic from south to north searches for a route on the network device A/B and is encapsulated and flows to the tunnel through L3 VXLAN. After reaching the network C/D, the VXLAN is decapsulated and then forwarded to Server A/Server B through the L2.

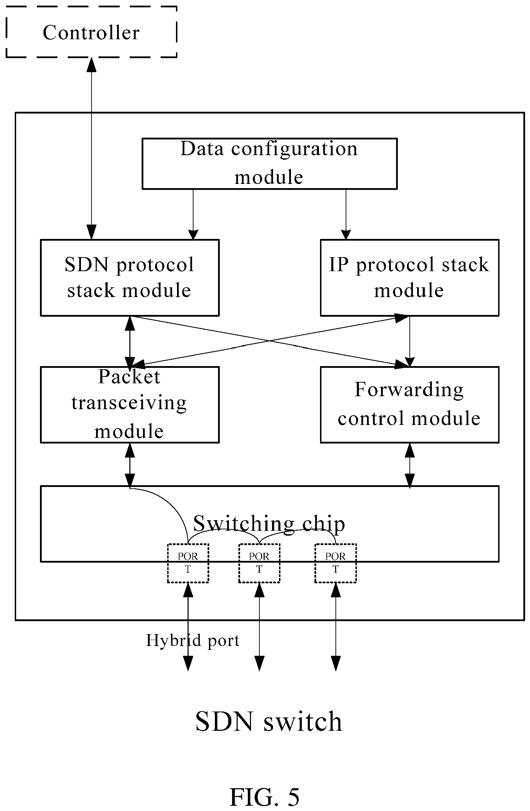

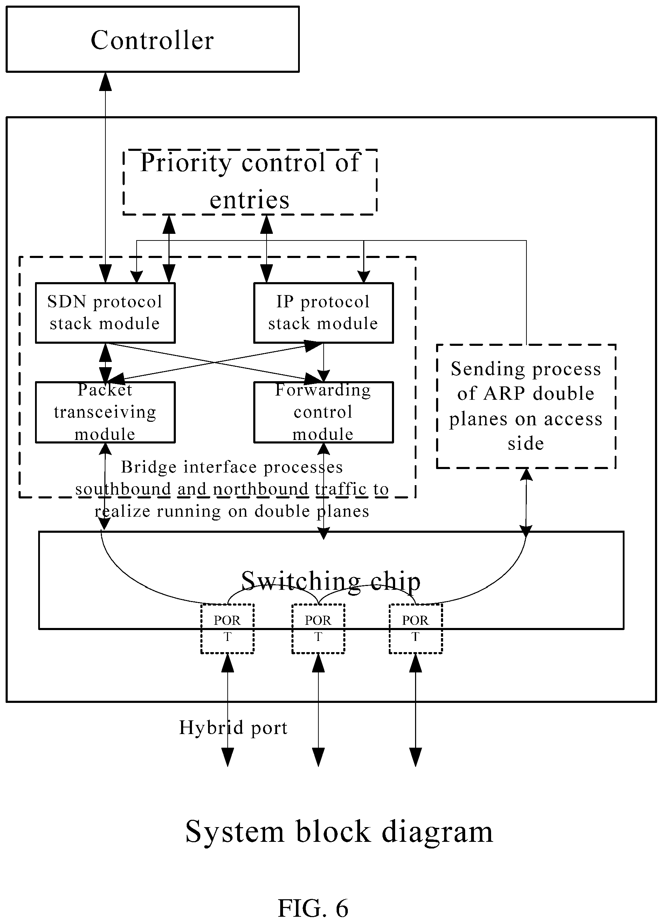

Fig. 5 is a diagram showing main components of the network device according to the present application, which mainly includes a data configuration module, a protocol stack module, a packet transceiving module, and a forwarding control module. The protocol stack module is divided into an SDN-related protocol stack (such as OPENFLOW protocol stack) and a conventional control plane protocol stack (such as IPSTACK). The SDN-related protocol stack is responsible for encapsulating the received packet into a PACKET_IN packet and sending it to the controller or parsing a protocol packet sent to the switch by the controller, and delivering the instruction of the controller to the network devices. The conventional control plane protocol stack is responsible for unified processing of the IP protocol stack. Here, due to the dual plane control, the bridge interface has both conventional business traffic and SDN traffic. Thus, there is some interaction between the conventional protocol stack and the SDN-related protocol stack. The interaction is implemented by means of a conventional protocol stack virtual interface and an SDN control plane virtual interface, namely, IPSTACK_VP and SDN_VP. The binding relationship between a physical port of the bridge interface and the two virtual interfaces is delivered after the user configures the hybrid port. The configuration module is responsible for providing a user layer configuration interface, and sending the configuration to the forwarding control module. The forwarding controller module is responsible for recording the information, and delivering the forwarding action of the SDN domain to a switching chip. A block diagram of the system according to the present application is as shown in Fig. 6.

Embodiment I: forwarding of northbound traffic in double control plane of gateway device

As shown in Fig. 4, the network device C/D is a layer 2 access device, and the network device A/B is a layer 3 gateway device. Before the SERVER sends traffic to the external network, since the internal IP (DIP) is not the IP of the local network segment, a destination MAC address of the gateway is requested.

For the northbound traffic (from the internal network of the data center toward the external network), the destination MAC of the packet sent by the SERVER is the MAC of the layer 3 gateway, that is, the MAC of the network device A/B, and the destination IP is an external network IP. The traffic searches on the access network device (that is, the network device C/D shown in Fig. 4) for a layer 2 accurate flow table (MAC table). If it is found that the traffic will go through the VXLAN tunnel, the network device C/D encapsulates a VXLAN packet header to the packet, and then sends the packet to the network device A/B. The packet searches on the network device A/B for a default flow table delivered by the controller, with the egress points to the external network.

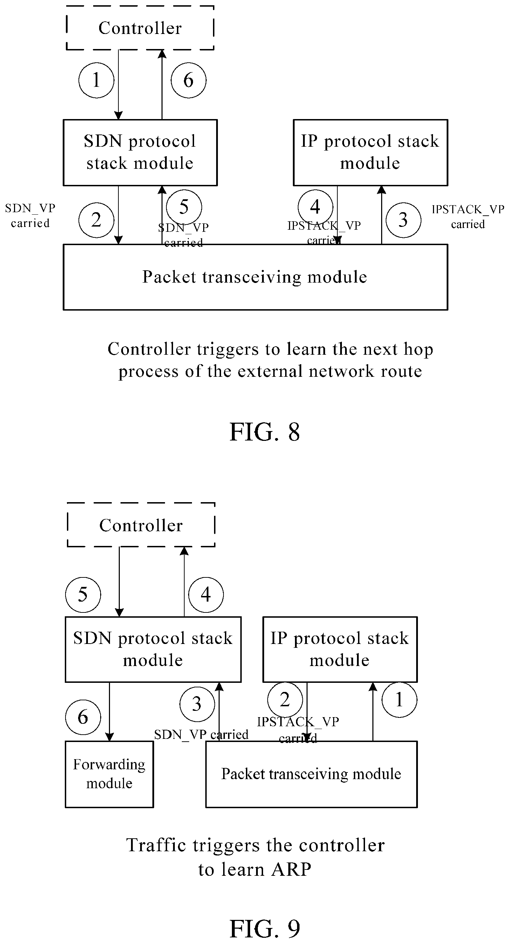

The default flow table delivered on the network device A/B is delivered by the SDN domain controller. After configuring the default route, the controller actively triggers the next hop ARP learning. The whole learning process is obtaining ARP from the SDN control plane to the conventional control plane. The process of learning the next hop ARP learning of the default route by the controller is as shown in Fig. 8. This process has six steps, corresponding to 1, 2, 3, 4, 5, 6 in the figure:
(1) The SDN domain configures a default egress route, and the controller delivers an ARP request packet to the SDN-related protocol stack.
(2) The SDN-related protocol stack delivers the ARP request packet (with an SDN_VP egress flag) to the packet transceiving module of the switch.
(3) The packet transceiving module of the switch receives the packet delivered by the SDN protocol stack, and if an SDN_VP egress flag is carried, the packet transceiving module converts the virtual port into IPSTACK_VP according to a mapping relationship, and then sends it to the conventional IP protocol stack plane.
(4) Upon receiving the ARP request, the conventional IP protocol stack sends an ARP reply packet as a response, and delivers the ARP reply packet (with the IPSTACK_VP egress flag) to the packet transceiving module.
(5) The packet transceiving module receives the packet sent by the conventional IP protocol stack, and, if an IPSTACK_VP egress flag is carried, converts the virtual port into SDN_VP according to a mapping relationship and sends the packet to the SDN protocol stack; and then the SDN protocol stack encapsulates the PACKET_IN header and sends the packet to the SDN controller.
(6) After receiving the ARP reply, the SDN controller learns the ARP and delivers the internal network host route.

After the external route is delivered by the controller, when the traffic sent by the SERVER reaches the network device C/D shown in Fig. 4, the traffic is encapsulated with a VXLAN header on the C/D device to enter the VXLAN tunnel pointing to the network device A/B. After reaching the network device A/B, the traffic is VXLAN decapsulated, and then enters the external network by inquiring the default route delivered by the controller.

Embodiment II: processing of southbound traffic in double control plane of gateway device

The conventional plane distributes a network segment route of the internal network to the connected external network router through a routing protocol enabled on the bridge interface. The traffic sent to the SDN internal network is guided down.

When the traffic reaches the network device A/B as shown in the figure, if an accurate entry (host route) can be found, the traffic directly enters the VXLAN tunnel according to the egress of the entry and the encapsulation information, and sent to the network device C/D which decapsulates the VXLAN packet and sends it to the SERVER.

For traffic that does not match a host route, the network device A/B needs to send the traffic to the conventional IP protocol stack plane, and then notify and trigger the SDN protocol plane, through the conventional protocol stack plane, to trigger the controller to learn the host flow table in the SDN domain. The process is as shown in Fig. 9.

For a data packet received on the bridge interface of the network device A/B, if no host route is found after looking up the hardware routing table, the forwarding module searches for a network segment route of the network segment to which the virtual machine belongs and sends it to the CPU.
(1) After receiving the data packet sent by the CPU, the packet transceiving module sends the data packet to the IP protocol stack of the conventional controller plane.
(2) In the IP protocol stack of the conventional control plane, the route is queried with a DIP of the packet. If a matched IPSTACK_VP egress route is found, the IP protocol stack process of the conventional control plane delivers a data packet (with an IPSTACK_VP egress flag) to the packet transceiving module. Otherwise, the IP protocol stack process of the conventional control plane triggers ARP learning of the conventional plane.
(3) The packet transceiving module receives the data packet delivered by the IP protocol stack process of the conventional control plane. If an IPSTACK_VP egress flag is carried, the packet transceiving module converts the virtual port into the corresponding SDN_VP according to the mapping relationship of the virtual port and sends it to the SDN protocol stack process.
(4) Then, the SDN protocol stack process encapsulates a pkt in header and then sends the paket to the SDN controller.
(5) After receiving the packet, the SDN controller triggers the ARP learning and sends entries to the SDN protocol stack.
(6) The SDN-related protocol stack delivers the entries to the forwarding module.

After the above process is completed, the accurate entry (host route) is, when the same packet is sent from the external network to the internal network and the packet enters the network device A/B, searched and encapsulated with the VXLAN packet header to enter the tunnel and then decapsulated and sent to the SERVER by the network device C/D.

### Embodiment III: ARP learning processing of access network device

As shown in Fig. 4, an L2 VXLAN tunnel and a mapping relationship between VLAN and VNI are configured on the conventional control plane of the network device C/D. The network device C/D is a layer 2 VXLAN access device, and the network device A/B is a layer 3 VXLAN gateway device.

Before sending traffic to the external network, the SERVER needs to send an ARP request to resolve the gateway MAC because the DIP is not within the local network segment. When receiving the ARP request sent by the Server, the network devices C/D encapsulate a VXLAN packet for the ARP packet to enter the VTEP tunnel. Therefore, the ARP packet encapsulated with the VXLAN packet header is sent to the network device A/B, and the network device A/B then learns the ARP of this VXLAN packet on the conventional control plane.

While introducing the ARP packet into the VTEP tunnel, the network device C/D also needs to copy the ARP packet and send it to the SDN-related protocol stack process. Then, the packet is encapsulated and sent to the controller by this process according to the Openflow protocol, thereby the controller learned this ARP.

Through the above method, an access network device sends the ARP packet sent by the SERVER to an upstream network device so that the uplink network device learns the ARP in the conventional plane and at the same time sends the ARP packet to the controller. In this way, the ARP can be learned on both the controller and the conventional plane, thereby achieving dual backup. In addition, when the virtual machine migrates, the controller can know the change of the virtual machine immediately.

For the downlink port, i.e., the ARP packet sent from the network device A/B to the network device C/D, the ARP packet follows forwarding of the normal conventional control plane and does not need to be copied and sent to the controller.

### Embodiment IV: priority control

the VXLAN ARP learning on the network device A/B also supports two control planes: conventional self-learning and controller delivery, where self-learning always has a higher priority. As shown in Fig. 1, when receiving the ARP packet from a service port, the network device A/B carries out a dynamic learning of the ARP according to the conventional self-learning process. The specific process is as follows:
a) if the ARP address is not included in the local routing table, directly adding the entry, where the FLAG is dynamic learning;
b) if the ARP address already exists locally and the MAC is consistent with the egress port information:
   i. refreshing the timeout when the original FLAG is dynamic learning;
   ii. modifying the FLAG of the entry to dynamic learning when the original FLAG is controller delivery.
c) if the ARP address already exists in the local area, but the MAC or egress port is not consistent: overwriting the original entry and setting the FLAG to dynamic learning.

When receiving the ARP flow table adding message from the control, the switch also needs to carry out ARP learning. The specific process is as follows:
a) if the ARP address is not included in the local routing table, directly adding the entry and labeling the Flag as controller delivery;
b) if the ARP address already exists locally and the MAC is consistent with the egress port information, not performing any processing; and
c) if the ARP address already exists in the local area, but the MAC is not consistent with the egress port information:
   i. not performing any processing in a case that the original FLAG is dynamic learning;
   ii. overwriting the original entry in a case that the original FLAG is controller delivery.

The controller compares the ARP stored in the controller itself with the ARP table on the switch periodically to ensure synchronization between the two. If an ARP is present in the controller but not in the switch, the ARP is delivered to the switch; and if an ARP is present in both the controller and the switch but the egresses thereof are different, the controller retrieves the ARP from the switch to overwrite the local one.

In addition, the MAC of VXLAN on the network device C/D is only controlled by the traditional plane and obtained through self-learning, but is not controlled by the controller.

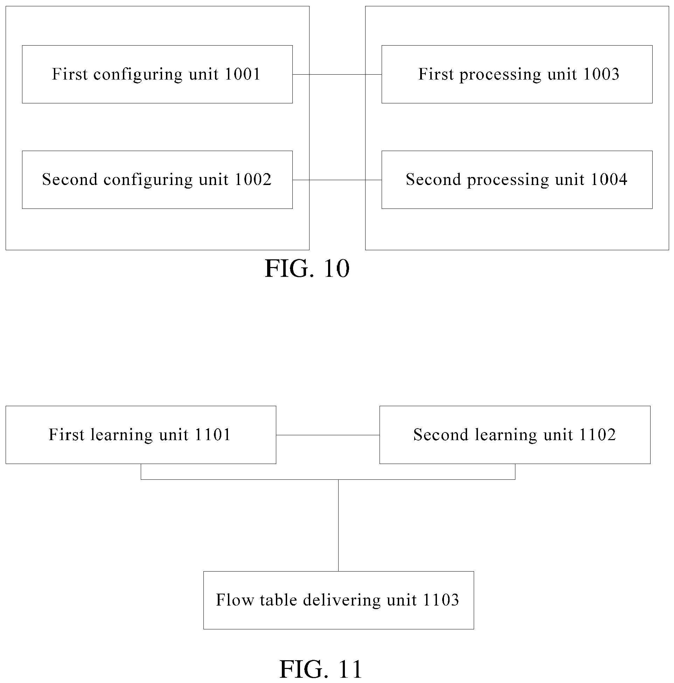

Fig. 10 is a first schematic structural diagram of a device for implementing double control planes according to an embodiment of the present application. As shown in Fig. 10, the device includes:
a first configuring unit 1001 configured to configure an ARP learning mechanism of a first control plane and a second control plane on a layer 3 switching device, wherein a priority of the first control plane is higher than that of the second control plane; configure a bridge interface on the layer 3 switching device, the bridge interface being bound with a first virtual interface and a second virtual interface, wherein the first virtual interface corresponds to the first control plane, and the second virtual interface corresponds to the second control plane;
a second configuring unit 1002 configured to configure an ARP packet forwarding mechanism on a layer 2 switching device;
a first processing unit 1003 configured to carry out ARP learning on the basis of the ARP learning mechanism on the layer 3 switching device; and forward traffic between the first control plane and the second control plane on the basis of the bridge interface on the layer 3 switching device; and
a second processing unit 1004 configured to forward an ARP packet on the basis of the ARP packet forwarding mechanism on the layer 2 switching device.

In an embodiment of the present application, the ARP learning mechanism of the first control plane is a self-learning mechanism, and the ARP learning mechanism of the second control plane is a controller delivery mechanism.

In an embodiment of the present application, the first processing unit 1003 includes:
a first learning sub-unit configured to inquiry, when the layer 3 switching device receives the ARP packet, whether an ARP address corresponding to the ARP packet is present in a local routing table; add, if the ARP address is not present in the local routing table, the ARP address to the local routing table, and label an entry corresponding to the ARP address as self-learning; label, if the ARP address is present in the local routing table and an MAC address corresponding to the ARP address is consistent with an MAC address corresponding to an egress port, the entry corresponding to the ARP address as self-learning, and refresh an update time for the entry corresponding to the ARP address; and overwrite, if the ARP address is present in the local routing table and an MAC address corresponding to the ARP address is not consistent with an MAC address corresponding to an egress port, a corresponding entry in the local routing table according to the ARP address corresponding to the ARP packet, and label the entry corresponding to the ARP address as self-learning.

In an embodiment of the present application, the first processing unit 1003 includes:
a second learning sub-unit configured to inquiry, when the layer 3 switching device receives an ARP flow table adding message from a controller, whether an ARP address corresponding to the ARP flow table adding message is present in the local routing table; add, if the ARP address is not present in the local routing table, the ARP address to the local routing table, and flag an entry corresponding to the ARP address as controller delivery; maintain the local routing table intact if the ARP address is present in the local routing table and an MAC address corresponding to the ARP address is consistent with an MAC address corresponding to an egress port; and if the ARP address is present in the local routing table and the MAC address corresponding to the ARP address is not consistent with the MAC address corresponding to the egress port, maintain the local routing table intact in a case that a corresponding entry in the local routing table is labeled as self-learning, and overwrite the corresponding entry in the local routing table according to the ARP address corresponding to the ARP flow table adding message in a case that the corresponding entry in the local routing table is labeled as controller delivery.

In an embodiment of the present application, the first virtual interface is an IP protocol stack virtual interface, and the second virtual interface is an SDN protocol stack virtual interface; wherein
the layer 3 switching device distributes a route of the SDN network to an egress router through the IP protocol stack virtual interface; and
the layer 3 switching device receives a flow table delivered by the controller through the SDN protocol stack virtual interface.

In an embodiment of the present application, the layer 3 switching device includes: an SDN protocol stack module, an IP protocol stack module, and a packet transceiving module; wherein
the SDN protocol stack module receives an ARP request sent by the controller, adds an SDN protocol stack virtual interface flag to the ARP request, and sends the ARP request to the packet transceiving module; the packet transceiving module replaces the SDN protocol stack virtual interface flag with an IP protocol stack virtual interface flag, and sends the ARP request to the IP protocol stack module;
the IP protocol stack module carries out the ARP learning, adds an IP protocol stack virtual interface flag to an ARP reply and sends the ARP reply to the packet transceiving module; and the packet transceiving module replaces the IP protocol stack virtual interface flag with an SDN protocol stack virtual interface flag and sends the ARP reply to the SDN protocol stack module; and
the SDN protocol stack module sends the ARP reply to the controller to trigger the controller to carry out the ARP learning according to the ARP reply.

In an embodiment of the present application, the layer 3 switching device includes: an SDN protocol stack module, an IP protocol stack module, and a packet transceiving module; wherein
for a layer 3 packet of southbound traffic, when the layer 3 packet reaches the bridge interface and no route is found, the packet is sent to the IP protocol stack module via a network segment route; the IP protocol stack module performs a route inquiry according to an destination IP of the packet, adds an IP protocol stack virtual interface flag to the packet if an egress route of the IP protocol stack virtual interface is found; and triggers the APR learning of the self-learning mechanism if the egress route of the IP protocol stack virtual interface is not found;
the IP protocol stack module sends the packet with the IP protocol stack virtual interface flag to the packet transceiving module; and the packet transceiving module replaces the IP protocol stack virtual interface flag with an SDN protocol stack virtual interface flag and send the packet to the SDN protocol stack module;
the SDN protocol stack module encapsulates the packet and sends the packet to the controller to trigger the controller to carry out the ARP learning; and
the SDN protocol stack module receives the flow table delivered by the controller.

In an embodiment of the present application, the second processing unit 1004 is specifically configured to send, when the ARP packet sent by a server is received by the layer 2 switching device, the ARP packet to the layer 3 switching device to carry out the ARP learning, and send the ARP packet to the controller to carry out the ARP learning.

In practical applications, the functions implemented by the respective units in the device for implementing double control planes may be implemented by a Central Processing Unit (CPU) or a Micro Processor Unit (MPU), or a Digital Signal Processor (DSP), or a Field Programmable Gate Array (FPGA) or the like located in the device for implementing double control planes.

Fig. 11 is a second schematic structural diagram of a device for implementing double control planes according to an embodiment of the present application. As shown in Fig. 11, the device includes:
a first learning unit 1101 configured to cause a controller, after a default route of an egress router is configured by an SDN domain, to actively trigger a next hop ARP learning of the default route;
a second learning unit 1102 configured to trigger, when the packet reaches a bridge interface of a layer 3 switching device and no route is found, the controller by the packet to carry out the ARP learning; and
a flow table delivering unit 1103 configured to deliver a flow table to the layer 3 switching device.

In an embodiment of the present application, the first learning unit 1101 is specifically configured to: send an ARP request to an SDN protocol stack module of the layer 3 switching device after the default route of the egress router is configured by the SDN domain, wherein the SDN protocol stack module adds an SDN protocol stack virtual interface flag to the ARP request and sends the ARP request to a packet transceiving module, the packet transceiving module replaces the SDN protocol stack virtual interface flag with an IP protocol stack virtual interface flag and sends the ARP request to an IP protocol stack module, the IP protocol stack module carries out the ARP learning, adds an IP protocol stack virtual interface flag to an ARP reply and sends the ARP reply to the packet transceiving module, and the packet transceiving module replaces the IP protocol stack virtual interface flag with the SDN protocol stack virtual interface flag and sends the ARP reply to the SDN protocol stack module; and receive the ARP reply sent by the SDN protocol stack module, and perform ARP learning according to the ARP reply.

In an embodiment of the present application, the second learning unit 1102 is specifically configured to: cause the controller to receive, when a layer 3 packet reaches the bridge interface and no route is found, an encapsulated packet sent by an SDN protocol stack module, wherein the encapsulated packet is generated in the following manner: sending, when the layer 3 packet reaches the bridge interface and no route is found, the packet to an IP protocol stack module via a network segment route, causing the IP protocol stack module to perform a route inquiry according to an destination IP of the packet, and add an IP protocol stack virtual interface flag to the packet in a case that an egress route of the IP protocol stack virtual interface is found, causing the IP protocol stack module to send the packet with the IP protocol stack virtual interface flag to the packet transceiving module, causing the packet transceiving module to replace the IP protocol stack virtual interface flag with an SDN protocol stack virtual interface flag and send the packet to the SDN protocol stack module, and causing the SDN protocol stack module to encapsulate the packet to obtain an encapsulated packet; and carry out, after receiving the encapsulated packet, the ARP learning and update the flow table.

In an embodiment of the present application, the device further includes a second learning unit configured to periodically compare a local routing table and a routing table on the switching device, and update, when an entry in the local routing table is inconsistent with that of the routing table on the switching device, the entry on the switching device to the local.

In practical applications, the functions implemented by the respective units in the device for implementing double control planes may be implemented by a CPU or an MPU, or a DSP, or an FPGA or the like located in the device for implementing double control planes.

Those skilled in the art will appreciate that embodiments of the present application can be provided as a method, a system, or a computer program product. Accordingly, the present application may take the form of a hardware embodiment, a software embodiment, or a combination of software and hardware. Moreover, the present application may take the form of a computer program product embodied on one or more computer-usable storage media (including but not limited to disk storage and optical storage, etc.) including a computer-usable program code.

The present application has been described with reference to flowcharts and/or block diagrams of the methods, apparatus (systems), and computer program products according to the embodiments of the present application. It should be understood that each flow and/or block in the flowcharts and/or block diagrams, as well as any combination thereof, may be implemented by computer program instructions. These computer program instructions may be provided to a general purpose computer, a special purpose computer, an embedded processor, or a processor of other programmable data processing apparatus to generate a machine, so that the instructions executed by a computer or a processor of any other programmable data processing apparatus generate an apparatus for implementing a specific function in one or more processes in the flowcharts and/or in one or more blocks in the block diagrams.

These computer program instructions may also be stored in a computer readable memory that can direct a computer or other programmable data processing apparatus to operate in a particular manner, such that the instructions stored in the computer readable memory produce an article that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or another programmable device provides steps for implementing a specific function in one or more processes in the flowcharts and/or in one or more blocks in the block diagrams.

Accordingly, in an embodiment of the present application, there is further provided a computer-readable storage storing a computer program which is configured to perform the method for implementing double control planes according to the embodiments of the present application.

The above are only preferred embodiments of the present application and not intended to limit the scope of the present application.

### INDUSTRIAL APPLICABILITY

According to the technical solutions of the embodiments of the present application, an ARP learning mechanism of a first control plane and a second control plane is configured on a layer 3 switching device, wherein a priority of the first control plane is higher than that of the second control plane; a bridge interface is configured on the layer 3 switching device, the bridge interface is bound with a first virtual interface and a second virtual interface, wherein the first virtual interface corresponds to the first control plane, and the second virtual interface corresponds to the second control plane; an ARP packet forwarding mechanism is configured on a layer 2 switching device; ARP learning is carried out on the basis of the ARP learning mechanism on the layer 3 switching device; traffic between the first control plane and the second control plane is forwarded on the basis of the bridge interface on the layer 3 switching device; and an ARP packet is forwarded on the basis of the ARP packet forwarding mechanism on the layer 2 switching device. By adopting the technical solutions of the embodiments of the present application, the stability of the entire network is increased while making use of the convenience brought by SDN network. When the controller fails or is disconnected, the entire network can still keep smooth running of the route according to the conventional control plane, thereby having extremely high applicability in the field of data centers.

## Claims

1. A method for enabling coexistence of a SDN control plane and a conventional control plane, said method comprising the steps of:
configuring (101) an address resolution protocol, abbreviated as ARP, learning mechanism of a SDN control plane and a conventional control plane on a layer 3 switching device, wherein a priority of the SDN control plane is higher than that of the conventional control plane;
configuring (102) a bridge interface on the layer 3 switching device, the bridge interface being bound with a first virtual interface and a second virtual interface, wherein the first virtual interface corresponds to the SDN control plane, and the second virtual interface corresponds to the conventional control plane;
configuring (103) an ARP packet forwarding mechanism on a layer 2 switching device;
carrying out (104) ARP learning on the basis of the ARP learning mechanism on the layer 3 switching device; forwarding traffic between the SDN control plane and the conventional control plane on the basis of the bridge interface on the layer 3 switching device; and
forwarding an ARP packet on the basis of the ARP packet forwarding mechanism on the layer 2 switching device;
wherein the first virtual interface is an IP protocol stack virtual interface, and the second virtual interface is a software defined network, abbreviated as SDN, protocol stack virtual interface;
wherein the layer 3 switching device comprises: an SDN protocol stack module, an IP protocol stack module, and a packet transceiving module; and
wherein in response to receiving an ARP request sent by a controller, the step of forwarding traffic between the SDN control plane and the conventional control plane on the basis of the bridge interface on the layer 3 switching device comprises the steps of:
causing the SDN protocol stack module to receive the ARP request sent by the controller, add an SDN protocol stack virtual interface flag to the ARP request and send the ARP request to the packet transceiving module; and causing the packet transceiving module to replaces the SDN protocol stack virtual interface flag with an IP protocol stack virtual interface flag and send the ARP request to the IP protocol stack module;
causing the IP protocol stack module to carry out the ARP learning, add an IP protocol stack virtual interface flag to an ARP reply and send the ARP reply to the packet transceiving module; and causing the packet transceiving module to replace the IP protocol stack virtual interface flag with an SDN protocol stack virtual interface flag and send the ARP reply to the SDN protocol stack module; and
causing the SDN protocol stack module to send the ARP reply to the controller to trigger the controller to carry out the ARP learning according to the ARP reply.

2. The method according to claim 1, wherein the ARP learning mechanism of the SDN control plane is a self-learning mechanism, and the ARP learning mechanism of the conventional control plane is a controller delivery mechanism.

3. The method according to claim 2, wherein the step of carrying out the ARP learning on the basis of the ARP learning mechanism on the layer 3 switching device comprises the steps of:
inquiring, when the layer 3 switching device receives the ARP packet, whether an ARP address corresponding to the ARP packet is present in a local routing table;
adding, if the ARP address is not present in the local routing table, the ARP address to the local routing table, and labeling an entry corresponding to the ARP address as self-learning;
labeling, if the ARP address is present in the local routing table and an MAC address corresponding to the ARP address is consistent with an MAC address corresponding to an egress port, the entry corresponding to the ARP address as self-learning, and refreshing an update time for the entry corresponding to the ARP address; and
overwriting, if the ARP address is present in the local routing table and the MAC address corresponding to the ARP address is not consistent with the MAC address corresponding to the egress port, a corresponding entry in the local routing table according to the ARP address corresponding to the ARP packet, and labeling the entry corresponding to the ARP address as self-learning.

4. The method according to claim 2, wherein the step of carrying out the ARP learning on the basis of the ARP learning mechanism on the layer 3 switching device comprises:
inquiring, when the layer 3 switching device receives an ARP flow table adding message from the controller, whether an ARP address corresponding to the ARP flow table adding message is present in the local routing table;
adding, if the ARP address is not present in the local routing table, the ARP address to the local routing table, and labeling an entry corresponding to the ARP address as controller delivery;
maintaining the local routing table intact if the ARP address is present in the local routing table and an MAC address corresponding to the ARP address is consistent with an MAC address corresponding to an egress port; and
maintaining the local routing table intact in a case that a corresponding entry in the local routing table is labeled as self-learning and overwriting the corresponding entry in the local routing table according to the ARP address corresponding to the ARP flow table adding message in a case that the corresponding entry in the local routing table is labeled as controller delivery, if the ARP address is present in the local routing table and the MAC address corresponding to the ARP address is not consistent with the MAC address corresponding to the egress port.

5. The method according to claim 1, wherein
the layer 3 switching device distributes a route of the SDN network to an egress router through the IP protocol stack virtual interface; and
the layer 3 switching device receives a flow table delivered by the controller through the SDN protocol stack virtual interface.

6. The method according to claim 5, wherein
in response to a layer 3 packet of southbound traffic, the step of forwarding traffic between the SDN control plane and the conventional control plane on the basis of the bridge interface on the layer 3 switching device comprises the steps of:
sending, for the layer 3 packet of southbound traffic when the layer 3 packet reaches the bridge interface and no route is found, the packet to the IP protocol stack module via a network segment route; causing the IP protocol stack module to perform a route inquiry according to an destination IP of the packet, add an IP protocol stack virtual interface flag to the packet if an egress route of the IP protocol stack virtual interface is found, and trigger the APR learning of the self-learning mechanism if the egress route of the IP protocol stack virtual interface is not found;
causing the IP protocol stack module to send the packet with the IP protocol stack virtual interface flag to the packet transceiving module; causing the packet transceiving module to replace the IP protocol stack virtual interface flag with an SDN protocol stack virtual interface flag and send the packet to the SDN protocol stack module;
causing the SDN protocol stack module to encapsulate the packet and send the packet to the controller to trigger the controller to carry out the ARP learning; and
causing the SDN protocol stack module to receive the flow table delivered by the controller.

7. The method according to claim 1, wherein the step of forwarding the ARP packet on the basis of the ARP packet forwarding mechanism on the layer 2 switching device comprises the steps of:
causing, when the ARP packet sent by a server is received by the layer 2 switching device, the layer 2 switching device to send the ARP packet to the layer 3 switching device to carry out the ARP learning; and sending the ARP packet to the controller to carry out the ARP learning.

8. A device for enabling coexistence of a SDN control plane and a conventional control plane, comprising:
a first configuring unit (1001) configured to configure an ARP learning mechanism of a SDN control plane and a conventional control plane on a layer 3 switching device, wherein a priority of the SDN control plane is higher than that of the conventional control plane; and configure a bridge interface on the layer 3 switching device, the bridge interface being bound with a first virtual interface and a second virtual interface, wherein the first virtual interface corresponds to the SDN control plane, and the second virtual interface corresponds to the conventional control plane;
a second configuring unit (1002) configured to configure an ARP packet forwarding mechanism on a layer 2 switching device;
a first processing unit (1003) configured to carry out ARP learning on the basis of the ARP learning mechanism on the layer 3 switching device; and forward traffic between the SDN control plane and the conventional control plane on the basis of the bridge interface on the layer 3 switching device; and
a second processing unit (1004) configured to forward an ARP packet on the basis of the ARP packet forwarding mechanism on the layer 2 switching device;
wherein the first virtual interface is an IP protocol stack virtual interface, and the second virtual interface is a software defined network, abbreviated as SDN, protocol stack virtual interface;
wherein the layer 3 switching device comprises: an SDN protocol stack module, an IP protocol stack module, and a packet transceiving module;
wherein in response to receiving an ARP request sent by a controller, when forwarding, by the first configuring unit (1001), traffic between the SDN control plane and the conventional control plane on the basis of the bridge interface on the layer 3 switching device, said first configuring unit (1001) is further configured for :
causing the SDN protocol stack module to receive the ARP request sent by the controller, add an SDN protocol stack virtual interface flag to the ARP request and send the ARP request to the packet transceiving module; and causing the packet transceiving module to replaces the SDN protocol stack virtual interface flag with an IP protocol stack virtual interface flag and send the ARP request to the IP protocol stack module;
causing the IP protocol stack module to carry out the ARP learning, add an IP protocol stack virtual interface flag to an ARP reply and send the ARP reply to the packet transceiving module; and causing the packet transceiving module to replace the IP protocol stack virtual interface flag with an SDN protocol stack virtual interface flag and send the ARP reply to the SDN protocol stack module; and
causing the SDN protocol stack module to send the ARP reply to the controller to trigger the controller to carry out the ARP learning according to the ARP reply.

9. A computer-readable storage storing a computer-executable instruction, which when executed by a processor cause said processor
to perform the method for enabling coexistence of a SDN control plane and a conventional control plane according to any one of claims 1 to 7.

## Patentansprüche

1. Verfahren zum Ermöglichen der Koexistenz einer SDN-Steuerungsebene und einer herkömmlichen Steuerungsebene, wobei das Verfahren die folgendedn Schritte umfasst:
Konfigurieren (101) eines Lernmechanismus für Adressauflösungsprotokoll (adress resolution protocol), abgekürzt als ARP, einer SDN-Steuerungsebene und einer herkömmlichen Steuerungsebene auf einer Schicht-3-Vermittlungsvorrichtung, wobei die Priorität der SDN-Steuerungsebene höher ist als die der herkömmlichen Steuerungsebene;
Konfigurieren (102) einer Bridge-Schnittstelle auf der Schicht-3-Vermittlungsvorrichtung, wobei die Bridge-Schnittstelle mit einer ersten virtuellen Schnittstelle und einer zweiten virtuellen Schnittstelle verbunden ist,
wobei die erste virtuelle Schnittstelle der SDN-Steuerungsebene zugeordnet und die zweite virtuelle Schnittstelle der konventionelle Steuerungsebene zugeordnet ist;
Konfigurieren (103) eines ARP-Paketweiterleitungsmechanismus auf einer Schicht-2-Vermittlungsvorrichtung;
Ausführen (104) des ARP-Lernens auf der Grundlage des ARP-Lernmechanismus auf der Schicht-3-Vermittlungsvorrichtung; Weiterleiten des Verkehrs zwischen der SDN-Steuerungsebene und der herkömmlichen Steuerungsebene auf der Grundlage der Bridge-Schnittstelle auf der Schicht-3-Vermittlungsvorrichtung; und
Weiterleiten eines ARP-Pakets auf der Grundlage des ARP-Paketweiterleitungsmechanismus auf der Schicht-2-Vermittlungsvorrichtung;
wobei die erste virtuelle Schnittstelle eine virtuelle IP-Protokollstapelschnittstelle ist und die zweite virtuelle Schnittstelle eine virtuelle Protokollstapelschnittstelle für ein software-definiertes Netzwerk (software defined network), abgekürzt als SDN, ist;
wobei die Schicht-3-Vermittlungsvorrichtung umfasst: ein SDN-Protokollstapelmodul,
ein IP-Protokollstapelmodul und ein Paket-Sende-/Empfangsmodul; und
wobei als Reaktion auf den Empfang einer von einem Kontroller gesendeten ARP-Anfrage der Schritt des Weiterleitens des Verkehrs zwischen der SDN-Steuerungsebene und der herkömmlichen Steuerungsebene mittles der Bridge-Schnittstelle auf der Schicht-3-Vermittlungsvorrichtung die folgenden Schritte umfasst:
Veranlassen des SDN-Protokollstapelmoduls, die von dem Kontroller gesendete ARP-Anfrage zu empfangen, ein Flag für virtuelle SDN-Protokollstapelschnittstelle zu der ARP-Anfrage hinzuzufügen und die ARP-Anfrage an das Paket-Sende-/Empfangsmodul zu senden; und Veranlassen des Paket-Sende-/Empfangsmoduls, das Flag für die virtuelle SDN-Protokollstapelschnittstelle durch ein Flag für die virtuelle IP-Protokollstapelschnittstelle zu ersetzen und die ARP-Anfrage an das IP-Protokollstapelmodul zu senden;
Veranlassen des IP-Protokollstapelmoduls, das ARP-Lernen auszuführen, ein Flag für die virtuelle IP-Protokollstapelschnittstelle zu einer ARP-Antwort hinzuzufügen und
die ARP-Antwort an das Paket-Sende-/Empfangsmodul zu senden; und Veranlassen des Paket-Sende-/Empfangsmoduls, das Flag für die virtuelle IP-Protokollstapelschnittstelle durch ein Flag für die virtuelle SDN-Protokollstapelschnittstelle zu ersetzen und die ARP-Antwort an das SDN-Protokollstapelmodul zu senden; und
Veranlassen des SDN-Protokollstapelmoduls, die ARP-Antwort an den Kontroller zu senden, um den Kontroller zu aktivieren, um das ARP-Lernen gemäß der ARP-Antwort auszuführen.

2. Verfahren nach Anspruch 1, wobei der ARP-Lernmechanismus der SDN-Steuerebene ein selbstlernender Mechanismus ist und der ARP-Lernmechanismus der herkömmlichen Steuerebene ein Kontrollerliefermechanismus (controller delivery mechanism) ist.

3. Verfahren nach Anspruch 2, wobei der Schritt des Ausführens des ARP-Lernens auf der Grundlage des ARP-Lernmechanismus auf der Schicht-3-Vermittlungsvorrichtung die folgenden Schritte umfasst:
Abfragen, ob eine dem ARP-Paket zugeordnete ARP-Adresse in einer lokalen Routingtabelle vorhanden ist, wenn die Schicht-3-Vermittlungsvorrichtung das ARP-Paket empfängt;
Hinzufügen der ARP-Adresse zu der lokalen Routingtabelle, wenn die ARP-Adresse nicht in der lokalen Routingtabelle vorhanden ist, und Kennzeichnen eines der ARP-Adresse zugeordneten Eintrags als selbstlernend;
Kennzeichnen des der ARP-Adresse zugeordneten Eintrags als selbstlernend, wenn die ARP-Adresse in der lokalen Routingtabelle vorhanden ist und eine der ARP-Adresse zugeordnete MAC-Adresse mit einer einem Egress-Port zugeordneten MAC-Adresse übereinstimmt, und Aktualisieren der Updatezeit für den der ARP-Adresse zugeordneten Eintrag; und
Überschreiben eines endsprechenden Eintrags in der lokalen Routingtabelle gemäß der dem ARP-Paket zugeordneten ARP-Adresse und Kennzeichnen des der ARP-Adresse zugeordneten Eintrags als selbstlernend, wenn die ARP-Adresse in der lokalen Routingtabelle vorhanden ist und die der ARP-Adresse zugeordnete MAC-Adresse nicht mit der dem Egress-Port zugeordneten MAC-Adresse übereinstimmt.

4. Verfahren nach Anspruch 2, wobei der Schritt des Ausführens des ARP-Lernens auf der Grundlage des ARP-Lernmechanismus auf der Schicht-3-Vermittlungsvorrichtung umfasst:
Abfragen, wenn die Schicht-3-Vermittlungsvorrichtung eine ARP-Flusstabellen-Hinzufügungsnachricht von dem Kontroller empfängt, ob eine der ARP-Flusstabellen-Hinzufügungsnachricht zugeordneten ARP-Adresse in der lokalen Routingtabelle vorhanden ist;
Hinzufügen der ARP-Adresse zu der lokalen Routingtabelle, wenn die ARP-Adresse nicht in der lokalen Routingtabelle vorhanden ist, und Kennzeichnen des der ARP-Adresse zugeordneten Eintrags als Kontrollerlieferung;
Beibehalten der lokalen Routing-Tabelle intakt, wenn die ARP-Adresse in der lokalen Routingtabelle vorhanden ist und eine der ARP-Adresse zugeordnete MAC-Adresse mit einer einem Egress-Port zugeordneten MAC-Adresse übereinstimmt; und
Beibehalten der lokalen Routingtabelle intakt in einem Fall, in dem der entsprechende Eintrag in der lokalen Routingtabelle als selbstlernend gekennzeichnet ist, und Überschreiben des entsprechenden Eintrags in der lokalen Routingtabelle gemäß der der ARP-Flusstabellen-Hinzufügungsnachricht zugeordneten ARP-Adresse in einem Fall, in dem der entsprechende Eintrag in der lokalen Routingtabelle als Kontrollerlieferung gekennzeichnet ist, wenn die ARP-Adresse in der lokalen Routingtabelle vorhanden ist und die der ARP-Adresse zugeordnete MAC-Adresse nicht mit der dem Egress-Port zugeordneten MAC-Adresse übereinstimmt.

5. Verfahren nach Anspruch 1, wobei
die Schicht-3-Vermittlungsvorrichtung eine Route des SDN-Netzwerks zu einem Egressrouter über die virtuelle IP-Protokollstapelschnittstelle verteilt; und
die Schicht-3-Vermittlungsvorrichtung eine von dem Kotroller gelieferte Flusstabelle über die virtuelle SDN-Protokollstapelschnittstelle empfängt.

6. Verfahren nach Anspruch 5, wobei
als Reaktion auf ein Schicht-3-Paket von südgehendem Verkehr der Schritt des Weiterleitens von Verkehr zwischen der SDN-Steuerebene und der herkömmlichen Steuerebene mittels der Bridge-Schnittstelle auf der Schicht-3-Vermittlungsvorrichtung die folgendedn Schritte umfasst:
Senden des Pakets an das IP-Protokollstapelmodul über eine Netzwerksegmentroute für das Schicht-3-Paket von südgehendem Verkehr, wenn das Schicht-3-Paket die Bridge-Schnittstelle erreicht und keine Route gefunden wird; Veranlassen des IP-Protokollstapelmoduls, eine Routenanfrage gemäß einer Ziel-IP des Pakets durchzuführen, dem Paket ein Flag für eine virtuelle IP-Protokollstapelschnittstelle hinzufügen, wenn eine Egressroute der virtuellen IP-Protokollstapelschnittstelle gefunden wird, und das APR-Lernen des Selbstlernmechanismus auszulösen, wenn die Egressroute der virtuellen IP-Protokollstapelschnittstelle nicht gefunden wird;
Veranlassen des IP-Protokollstapelmoduls, das Paket mit dem Flag für virtuelle IP-Protokollstapelschnittstelle an das Paket-Sende-/Empfangsmodul zu senden;
Veranlassen des Paket-Sende-/Empfangsmoduls, das Flag für virtuelle IP-Protokollstapelschnittstelle durch ein Flag für virtuelle SDN-Protokollstapelschnittstelle zu ersetzen und das Paket an das SDN-Protokollstapelmodul zu senden;
Veranlassen des SDN-Protokollstapelmoduls, das Paket zu kapseln und das Paket an den Kontroller zu senden, um den Kontroller zum Ausführen des ARP-Lernens zu aktivieren; und
Veranlassen des SDN-Protokollstapelmoduls, die vom Kontroller gelieferte Flusstabelle zu empfängen.

7. Verfahren nach Anspruch 1, wobei der Schritt des Weiterleitens des ARP-Pakets auf der Grundlage des ARP-Paketweiterleitungsmechanismus auf der Schicht-2-Vermittlungsvorrichtung die folgenden Schritte umfasst:
Veranlassen der Schicht-2-Vermittlungsvorrichtung, das ARP-Paket an die Schicht-3-Vermittlungsvorrichtung zum Auszuführen des ARP-Lernens zu senden,
wenn das von einem Server gesendete ARP-Paket von der Schicht-2-Vermittlungsvorrichtung empfangen wird; und Senden des ARP-Pakets an den Kontroller, um das ARP-Lernen durchzuführen.

8. Vorrichtung zum Ermöglichen der Koexistenz einer SDN-Steuerungsebene und einer herkömmlichen Steuerungsebene, umfassend:
eine erste Konfigurationseinheit (1001), die dazu eingerichtet ist, einen ARP-Lernmechanismus einer SDN-Steuerungsebene und einer herkömmlichen Steuerungsebene auf einer Schicht-3-Vermittlungsvorrichtung zu konfigurieren,
wobei die Priorität der SDN-Steuerungsebene höher ist als die der herkömmlichen Steuerungsebene; und eine Bridge-Schnittstelle auf der Schicht-3-Vermittlungsvorrichtung zu konfigurieren, wobei die Bridge-Schnittstelle mit einer ersten virtuellen Schnittstelle und einer zweiten virtuellen Schnittstelle verbunden ist, wobei die erste virtuelle Schnittstelle der SDN-Steuerungsebene zugeordnet und die zweite virtuelle Schnittstelle der herkömmlichen Steuerung zugeordnet ist;
eine zweite Konfigurationseinheit (1002), die dazu eingerichtet ist, einen ARP-Paketweiterleitungsmechanismus auf einer Schicht-2-Vermittlungsvorrichtung zu konfigurieren;
eine erste Verarbeitungseinheit (1003), die dazu eingerichtet ist, ARP-Lernen auf der Grundlage des ARP-Lernmechanismus auf der Schicht-3-Vermittlungsvorrichtung durchzuführen; und Verkehr zwischen der SDN-Steuerebene und der herkömmlichen Steuerebene mittels der Bridge-Schnittstelle auf der Schicht-3-Vermittlungsvorrichtung weiterzuleiten; und
eine zweite Verarbeitungseinheit (1004), die dazu eingerichtet ist, ein ARP-Paket auf der Grundlage des ARP-Paketweiterleitungsmechanismus auf der Schicht-2-Vermittlungsvorrichtung weiterzuleiten;
wobei die erste virtuelle Schnittstelle eine virtuelle IP-Protokollstapelschnittstelle ist und die zweite virtuelle Schnittstelle eine virtuelle Protokollstapelschnittstelle für ein software-definiertes Netzwerk (software defined network), abgekürzt als SDN, ist;
wobei die Schicht-3-Vermittlungsvorrichtung umfasst: ein SDN-Protokollstapelmodul,
ein IP-Protokollstapelmodul und ein Paket-Sende-/Empfangsmodul;
wobei als Reaktion auf den Empfang einer von einem Kontroller gesendeten ARP-Anfrage, beim Weiterleiten des Verkehrs zwischen der SDN-Steuerungsebene und der herkömmlichen Steuerungsebene mittels der Bridge-Schnittstelle auf der Schicht-3-Vermittlungsvorrichtung durch die erste Konfigurationseinheit (1001) die Konfigurationseinheit (1001) weiter dazu eingerichtet ist:
Veranlassen des SDN-Protokollstapelmoduls, die von dem Kontroller gesendete ARP-Anfrage zu empfangen, ein Flag für virtuelle SDN-Protokollstapelschnittstelle zu der ARP-Anfrage hinzuzufügen und die ARP-Anfrage an das Paket-Sende-/Empfangsmodul zu senden; und Veranlassen des Paket-Sende-/Empfangsmoduls, das Flag für die virtuelle SDN-Protokollstapelschnittstelle durch ein Flag für die virtuelle IP-Protokollstapelschnittstelle zu ersetzen und die ARP-Anfrage an das IP-Protokollstapelmodul zu senden;
Veranlassen des IP-Protokollstapelmoduls, das ARP-Lernen auszuführen, ein Flag für die virtuelle IP-Protokollstapelschnittstelle zu einer ARP-Antwort hinzuzufügen und
die ARP-Antwort an das Paket-Sende-/Empfangsmodul zu senden; und Veranlassen des Paket-Sende-/Empfangsmoduls, das Flag für die virtuelle IP-Protokollstapelschnittstelle durch ein Flag für die virtuelle SDN-Protokollstapelschnittstelle zu ersetzen und die ARP-Antwort an das SDN-Protokollstapelmodul zu senden; und
Veranlassen des SDN-Protokollstapelmoduls, die ARP-Antwort an den Kontroller zu senden, um den Kontroller zu aktivieren, um das ARP-Lernen gemäß der ARP-Antwort auszuführen.

9. Computerlesbarer Speicher, der einen computerausführbaren Befehl speichert, der beim Ausführen durch einen Prozessor den Prozessor veranlasst, das Verfahren zum Ermöglichen der Koexistenz einer SDN-Steuerungsebene und einer herkömmlichen Steuerungsebene nach einem der Ansprüche 1 bis 7 durchzuführen.

## Revendications

1. Procédé pour permettre la coexistence d'un plan de commande de réseau SDN et d'un plan de commande conventionnel, ledit procédé comprenant les étapes ci-dessous consistant à :
configurer (101) un mécanisme d'apprentissage de protocole de résolution d'adresse, ARP en abrégé, d'un plan de commande de réseau SDN et d'un plan de commande conventionnel sur un dispositif de commutation de couche 3, dans lequel une priorité du plan de commande de réseau SDN est supérieure à celle du plan de commande conventionnel ;
configurer (102) une interface de pont sur le dispositif de commutation de couche 3, l'interface de pont étant liée à une première interface virtuelle et à une seconde interface virtuelle, dans laquelle la première interface virtuelle correspond au plan de commande de réseau SDN, et la seconde interface virtuelle correspond au plan de commande conventionnel ;
configurer (103) un mécanisme d'acheminement de paquets de protocole ARP sur un dispositif de commutation de couche 2 ;
exécuter (104) un apprentissage de protocole ARP sur la base du mécanisme d'apprentissage de protocole ARP sur le dispositif de commutation de couche 3 ;
acheminer du trafic entre le plan de commande de réseau SDN et le plan de commande conventionnel sur la base de l'interface de pont sur le dispositif de commutation de couche 3 ; et
acheminer un paquet de protocole ARP sur la base du mécanisme d'acheminement de paquets de protocole ARP sur le dispositif de commutation de couche 2 ;
dans lequel la première interface virtuelle est une interface virtuelle de pile de protocoles IP, et la seconde interface virtuelle est une interface virtuelle de pile de protocoles de réseau défini par logiciel, SDN en abrégé ;
dans lequel le dispositif de commutation de couche 3 comprend : un module de pile de protocoles de réseau SDN, un module de pile de protocoles IP, et un module d'émission-réception de paquets ; et
dans lequel, en réponse à la réception d'une demande de protocole ARP envoyée par un contrôleur, l'étape d'acheminement du trafic entre le plan de commande de réseau SDN et le plan de commande conventionnel sur la base de l'interface de pont sur le dispositif de commutation de couche 3 comprend les étapes ci-dessous consistant à :
amener le module de pile de protocoles de réseau SDN à recevoir la demande de protocole ARP envoyée par le contrôleur, à ajouter un drapeau d'interface virtuelle de pile de protocoles de réseau SDN à la demande de protocole ARP et à envoyer la demande de protocole ARP au module d'émission-réception de paquets ; et
amener le module d'émission-réception de paquets à remplacer le drapeau d'interface virtuelle de pile de protocoles de réseau SDN par un drapeau d'interface virtuelle de pile de protocoles IP et à envoyer la demande de protocole ARP au module de pile de protocoles IP ;
amener le module de pile de protocoles IP à exécuter l'apprentissage de protocole ARP, à ajouter un drapeau d'interface virtuelle de pile de protocoles IP à une réponse de protocole ARP, et à envoyer la réponse de protocole ARP au module d'émission-réception de paquets ;
amener le module d'émission-réception de paquets à remplacer le drapeau d'interface virtuelle de pile de protocoles IP par un drapeau d'interface virtuelle de pile de protocoles de réseau SDN et à envoyer la réponse de protocole ARP au module de pile de protocoles de réseau SDN ; et
amener le module de pile de protocoles de réseau SDN à envoyer la réponse de protocole ARP au contrôleur pour déclencher le contrôleur afin d'exécuter l'apprentissage de protocole ARP selon la réponse de protocole ARP.

2. Procédé selon la revendication 1, dans lequel le mécanisme d'apprentissage de protocole ARP du plan de commande de réseau SDN est un mécanisme d'auto-apprentissage, et le mécanisme d'apprentissage de protocole ARP du plan de commande conventionnel est un mécanisme de distribution de contrôleur.

3. Procédé selon la revendication 2, dans lequel l'étape d'exécution de l'apprentissage de protocole ARP sur la base du mécanisme d'apprentissage de protocole ARP sur le dispositif de commutation de couche 3 comprend les étapes ci-dessous consistant à :
demander, lorsque le dispositif de commutation de couche 3 reçoit le paquet de protocole ARP, si une adresse de protocole ARP correspondant au paquet de protocole ARP est présente dans une table de routage locale ;
ajouter, si l'adresse de protocole ARP n'est pas présente dans la table de routage locale, l'adresse de protocole ARP à la table de routage locale, et étiqueter une entrée correspondant à l'adresse de protocole ARP comme étant une entrée d'auto-apprentissage ;
étiqueter, si l'adresse de protocole ARP est présente dans la table de routage locale et si une adresse de commande d'accès au support, MAC, correspondant à l'adresse de protocole ARP est compatible avec une adresse MAC correspondant à un port de sortie, l'entrée, correspondant à l'adresse de protocole ARP, comme étant une entrée d'auto-apprentissage, et rafraîchir un temps de mise à jour pour l'entrée correspondant à l'adresse de protocole ARP ; et
écraser, si l'adresse de protocole ARP est présente dans la table de routage locale et si l'adresse MAC correspondant à l'adresse de protocole ARP n'est pas compatible avec l'adresse MAC correspondant au port de sortie, une entrée correspondante dans la table de routage locale selon l'adresse de protocole ARP correspondant au paquet de protocole ARP, et étiqueter l'entrée correspondant à l'adresse de protocole ARP comme étant une entrée d'auto-apprentissage.

4. Procédé selon la revendication 2, dans lequel l'étape d'exécution de l'apprentissage de protocole ARP sur la base du mécanisme d'apprentissage de protocole ARP sur le dispositif de commutation de couche 3 comprend les étapes ci-dessous consistant à :
demander, lorsque le dispositif de commutation de couche 3 reçoit un message d'ajout de table de flux de protocole ARP en provenance du contrôleur, si une adresse de protocole ARP correspondant au message d'ajout de table de flux de protocole ARP est présente dans la table de routage locale ;
ajouter, si l'adresse de protocole ARP n'est pas présente dans la table de routage locale, l'adresse de protocole ARP, à la table de routage locale, et étiqueter une entrée correspondant à l'adresse de protocole ARP comme étant une entrée de distribution de contrôleur ;
maintenir intacte la table de routage locale si l'adresse de protocole ARP est présente dans la table de routage locale et si une adresse MAC correspondant à l'adresse de protocole ARP est compatible avec une adresse MAC correspondant à un port de sortie ; et
maintenir intacte la table de routage locale dans un cas où une entrée correspondante dans la table de routage locale est étiquetée comme étant une entrée d'auto-apprentissage, et écraser l'entrée correspondante dans la table de routage locale selon l'adresse de protocole ARP correspondant au message d'ajout de table de flux de protocole ARP dans un cas où l'entrée correspondante dans la table de routage locale est étiquetée comme étant une entrée de distribution de contrôleur, si l'adresse de protocole ARP est présente dans la table de routage locale et si l'adresse MAC correspondant à l'adresse de protocole ARP n'est pas compatible avec l'adresse MAC correspondant au port de sortie.

5. Procédé selon la revendication 1, dans lequel :
le dispositif de commutation de couche 3 distribue un itinéraire du réseau SDN à un routeur de sortie par l'intermédiaire de l'interface virtuelle de pile de protocoles IP ; et
le dispositif de commutation de couche 3 reçoit une table de flux délivrée par le contrôleur par l'intermédiaire de l'interface virtuelle de pile de protocoles de réseau SDN.

6. Procédé selon la revendication 5, dans lequel :
en réponse à un paquet de couche 3 de trafic nord-sud, l'étape d'acheminement du trafic entre le plan de commande de réseau SDN et le plan de commande conventionnel sur la base de l'interface de pont sur le dispositif de commutation de couche 3 comprend les étapes ci-dessous consistant à :
envoyer, pour le paquet de couche 3 de trafic nord-sud, lorsque le paquet de couche 3 atteint l'interface de pont et qu'aucun itinéraire n'est trouvé, le paquet, au module de pile de protocoles IP, par l'intermédiaire d'un itinéraire de segment de réseau ;
amener le module de pile de protocoles IP à mettre en oeuvre une recherche d'itinéraire selon une adresse IP de destination du paquet, à ajouter un drapeau d'interface virtuelle de pile de protocoles IP au paquet si un itinéraire de sortie de l'interface virtuelle de pile de protocoles IP est trouvé, et à déclencher l'apprentissage de protocole ARP du mécanisme d'auto-apprentissage si l'itinéraire de sortie de l'interface virtuelle de pile de protocoles IP n'est pas trouvé ;
amener le module de pile de protocoles IP à envoyer le paquet avec le drapeau d'interface virtuelle de pile de protocoles IP au module d'émission-réception de paquets ;
amener le module d'émission-réception de paquets à remplacer le drapeau d'interface virtuelle de pile de protocoles IP par un drapeau d'interface virtuelle de pile de protocoles de réseau SDN et à envoyer le paquet au module de pile de protocoles de réseau SDN ;
amener le module de pile de protocoles de réseau SDN à encapsuler le paquet et à envoyer le paquet au contrôleur pour déclencher le contrôleur afin d'exécuter l'apprentissage de protocole ARP ; et
amener le module de pile de protocoles de réseau SDN à recevoir la table de flux délivrée par le contrôleur.

7. Procédé selon la revendication 1, dans lequel l'étape d'acheminement du paquet de protocole ARP sur la base du mécanisme d'acheminement de paquets de protocole ARP sur le dispositif de commutation de couche 2 comprend les étapes ci-dessous consistant à :
amener, lorsque le paquet de protocole ARP envoyé par un serveur est reçu par le dispositif de commutation de couche 2, le dispositif de commutation de couche 2 à envoyer le paquet de protocole ARP au dispositif de commutation de couche 3 pour exécuter l'apprentissage de protocole ARP ; et
envoyer le paquet de protocole ARP au contrôleur pour exécuter l'apprentissage de protocole ARP.

8. Dispositif destiné à permettre la coexistence d'un plan de commande de réseau SDN et d'un plan de commande conventionnel, comprenant :
une première unité de configuration (1001) configurée de manière à configurer un mécanisme d'apprentissage de protocole ARP d'un plan de commande de réseau SDN et d'un plan de commande conventionnel sur un dispositif de commutation de couche 3, dans lequel une priorité du plan de commande de réseau SDN est supérieure à celle du plan de commande conventionnel, et à configurer une interface de pont sur le dispositif de commutation de couche 3, l'interface de pont étant liée à une première interface virtuelle et à une seconde interface virtuelle, dans laquelle la première interface virtuelle correspond au plan de commande de réseau SDN, et la seconde interface virtuelle correspond au plan de commande conventionnel ;
une seconde unité de configuration (1002) configurée de manière à configurer un mécanisme d'acheminement de paquets de protocole ARP sur un dispositif de commutation de couche 2 ;
une première unité de traitement (1003) configurée de manière à exécuter un apprentissage de protocole ARP sur la base du mécanisme d'apprentissage de protocole ARP sur le dispositif de commutation de couche 3, et à acheminer du trafic entre le plan de commande de réseau SDN et le plan de commande conventionnel sur la base de l'interface de pont sur le dispositif de commutation de couche 3 ; et
une seconde unité de traitement (1004) configurée de manière à acheminer un paquet de protocole ARP sur la base du mécanisme d'acheminement de paquets de protocole ARP sur le dispositif de commutation de couche 2 ;
dans laquelle la première interface virtuelle est une interface virtuelle de pile de protocoles IP, et la seconde interface virtuelle est une interface virtuelle de pile de protocoles de réseau défini par logiciel, SDN en abrégé ;
dans lequel le dispositif de commutation de couche 3 comprend : un module de pile de protocoles de réseau SDN, un module de pile de protocoles IP, et un module d'émission-réception de paquets ;
dans laquelle, en réponse à la réception d'une demande de protocole ARP envoyée par un contrôleur, lors de l'acheminement, par la première unité de configuration (1001), du trafic entre le plan de commande de réseau SDN et le plan de commande conventionnel sur la base de l'interface de pont sur le dispositif de commutation de couche 3, ladite première unité de configuration (1001) est en outre configurée de manière à :
amener le module de pile de protocoles de réseau SDN à recevoir la demande de protocole ARP envoyée par le contrôleur, à ajouter un drapeau d'interface virtuelle de pile de protocoles de réseau SDN à la demande de protocole ARP et à envoyer la demande de protocole ARP au module d'émission-réception de paquets ; et
amener le module d'émission-réception de paquets à remplacer le drapeau d'interface virtuelle de pile de protocoles de réseau SDN par un drapeau d'interface virtuelle de pile de protocoles IP et à envoyer la demande de protocole ARP au module de pile de protocoles IP ;
amener le module de pile de protocoles IP à exécuter l'apprentissage de protocole ARP, à ajouter un drapeau d'interface virtuelle de pile de protocoles IP à une réponse de protocole ARP, et à envoyer la réponse de protocole ARP au module d'émission-réception de paquets ;
amener le module d'émission-réception de paquets à remplacer le drapeau d'interface virtuelle de pile de protocoles IP par un drapeau d'interface virtuelle de pile de protocoles de réseau SDN et à envoyer la réponse de protocole ARP au module de pile de protocoles de réseau SDN ; et
amener le module de pile de protocoles de réseau SDN à envoyer la réponse de protocole ARP au contrôleur pour déclencher le contrôleur afin d'exécuter l'apprentissage de protocole ARP selon la réponse de protocole ARP.

9. Support de stockage lisible par ordinateur stockant une instruction exécutable par ordinateur, qui, lorsqu'elle est exécutée par un processeur, amène ledit processeur à mettre en oeuvre le procédé pour permettre la coexistence d'un plan de commande de réseau SDN et d'un plan de commande conventionnel selon l'une quelconque des revendications 1 à 7.
